# EUROPEAN PATENT APPLICATION

(11) **EP 2 650 957 A1**
(43) Date of publication of application: **16.10.2013**
(21) Application number: 11847550.8
(22) Date of filing: 22.11.2011
(51) Int. Cl.: H01M 8/02, H01M 8/10

(54) **SEAL STRUCTURE FOR FUEL CELL**

(30) Priority: 06.12.2010 JP 2010271248
(71) Applicant: NOK Corporation, Tokyo 105-8585 (JP)
(72) Inventor: KOGA Shotaro, Fujisawa-shi Kanagawa 251-0042 (JP); KURANO Yoshihiro, Fujisawa-shi Kanagawa 251-0042 (JP)
(74) Representative: TBK
(86) International application number: PCT/JP2011/076847
(87) International publication number: WO 2012/077492

(57) **Abstract**

Provided is a fuel cell seal structure that can achieve simplification of component shapes, easier production and assembly, and cost reductions because groove processing in one of a pair of separators sandwiching a membrane electrode assembly and integral forming of gaskets are unnecessary. To achieve this purpose, a membrane electrode assembly provided with electrode layers on both sides of an electrolyte membrane and separators that sandwich the membrane electrode assembly are provided. The planar dimensions of the electrode layers are set identical to each other. The planar dimensions of the electrolyte membrane are set larger than the electrode layers. The planar dimensions of the separators are set even larger than the electrolyte membrane. Based on this basic constitution, a first gasket held by one separator and in intimate contact with the other separator and a second gasket held by the one separator and in intimate contact with the electrolyte membrane are provided. Also provided is a reinforcing member that is separate from the electrode layer and that is meant to reinforce the electrolyte membrane with which the second gasket is in intimate contact from the back surface of the electrolyte membrane.

## Description

### BACKGROUND OF THE INVENTION

### Field of the Invention

The present invention relates to a seal structure for a fuel cell.

### Description of the Conventional Art

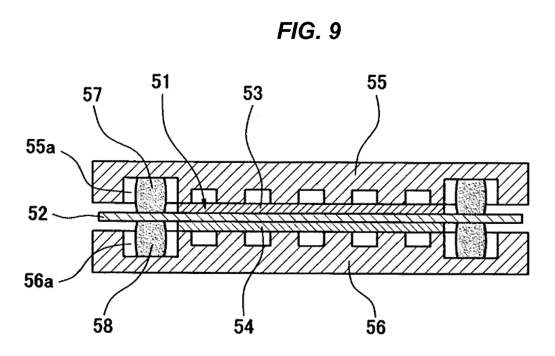

Conventionally, as shown in Fig. 9, there has been known a fuel cell having a membrane electrode assembly 51 which is provided with a pair of electrode layers 53 and 54 in both surfaces of an electrolyte membrane 52, and structured such that the membrane electrode assembly 51 is sandwiched by a pair of separators 55 and 56 (refer to patent document 1). Further, in the fuel cell, gaskets 57 and 58 are assembled respectively in an anode side and a cathode side in a peripheral edge portion of the membrane electrode assembly 51 for sealing a fluid, for example, a fuel gas. In the example shown in Fig. 9, grooves 55a and 56a are provided respectively at corresponding positions to a pair of separators 55 and 56, the gaskets 57 and 58 are installed to the grooves 55a and 56a, and each of the gaskets 57 and 58 comes into close contact with the electrolyte membrane 52. Further, the gaskets 57 and 58 are integrally formed respectively at the corresponding positions to a pair of separators 55 and 56, and each of the gaskets 57 and 58 comes into close contact with the electrolyte membrane 52.

In the meantime, in recent years, in order to achieve dissemination of the fuel cell, there have been demanded to simplify a part shape, facilitate manufacturing and assembling, and reduce a cost. In this regard, in the prior art, since it is necessary to apply a groove processing and a gasket integral forming to a pair of separators, a problem to be solved has been left yet.

### Prior Art Document

### Patent Document

Patent Document 1: Japanese Unexamined Patent Publication No. 2007-141486

### SUMMARY OF THE INVENTION

### Problem to be Solved by the Invention

The present invention is made by taking the above points into consideration, and an object of the present invention is to provide a seal structure for a fuel cell which does not require a groove processing and a gasket integral forming in one of a pair of separators sandwiching a membrane electrode assembly, and can simplify a part shape, facilitate manufacturing and assembling and reduce a cost in this regard.

### Means for Solving the Problem

In order to achieve the object mentioned above, according to claim 1 of the present invention, there is provided a seal structure provided in a fuel cell having a membrane electrode assembly which is provided with a pair of electrode layers in both surfaces of an electrolyte membrane, and a pair of separators which sandwich the membrane electrode assembly, and structured such that plane dimensions of a pair of electrode layers are set to be equal to each other, a plane dimension of the electrolyte membrane is set to be larger than the electrode layer, and a plane dimension of the separator is set to be further larger than the electrolyte membrane, the seat structure comprising:
a first gasket which is retained to one separator of a pair of separators and comes into close contact with the other separator; and
a second gasket which is retained to the one separator in an inner peripheral side of the first gasket and comes into close contact with the electrolyte membrane,
wherein a reinforcing member which is a separate body from the electrode layer is provided between the electrolyte membrane and the other separator for reinforcing the electrolyte membrane with which the second gasket comes into close contact, from a back surface side of the electrolyte membrane.

Further, according to claim 2 of the present invention, there is provided the sealing structure described in the claim 1 mentioned above, wherein a protection member is provided in a front surface side of the electrolyte membrane at a position two-dimensionally lapping over the reinforcing member which is provided in a back surface side of the electrolyte membrane, and the second gasket comes into close contact with the protection member.

Further, according to claim 3 of the present invention, there is provided the seal structure described in the claim 1 or 2 mentioned above, wherein the reinforcing member is constructed by a resin film.

Further, according to claim 4 of the present invention, there is provided the seal structure described in the claim 2 or 3 mentioned above, wherein the protection member is constructed by a resin film.

In the seal structure according to the present invention which is provided with the structure mentioned above, its base structure is first of all provided with the membrane electrode assembly which is provided with a pair of electrode layers on both surfaces of the electrolyte membrane, and a pair of separators which sandwich the membrane electrode assembly, the plane dimensions of a pair of electrode layers are set to be equal to each other, the plane dimension of the electrolyte membrane is set to be larger than the electrode layer, and the plane dimension of the separator is set to be further larger than the electrolyte membrane. Accordingly, since one separator of a pair of separators sandwiching the membrane electrode assembly is provided with both a section which is opposed to the other separator, and a section which is opposed to the electrolyte membrane in the inner peripheral side thereof, an anode side gasket and a cathode side gasket are both intensively set in both the sections. As a breakdown of the gasket, there are provided the first gasket which is retained to the one separator and comes into close contact with the other separator, and the second gasket which is retained to the one separator in the inner peripheral side of the first gasket and comes into close contact with the electrolyte membrane.

According to this structure, since the first gasket is provided over a full distance between a pair of separators, a seal surface pressure can be secured between the first gasket and the separator. However, in the second gasket, since a space is left in the back surface side of the electrolyte membrane, the electrolyte membrane constructed by the soft material runs out to the space, whereby the seal surface pressure can not be secured. Accordingly, in the present invention, the reinforcing member is placed in the space, thereby preventing the runout and securing the seal surface pressure.

With regard to the reinforcing member, since the parts in the basic structure mentioned above can not be used as the reinforcing member for their dimensional relationships, a part exclusively used for reinforcing is prepared and is arranged between the electrolyte membrane and the other separator. As the part exclusively used for reinforcing, any part can be employed as long as its hardness is greater than the second gasket for its placing purpose, for example, a resin film is employed. In other words, a resin film having an equal thickness to a distance between the electrolyte membrane and the other separator is used as the exclusive part.

Further, in connection with the placing of the reinforcing member in the back surface side of the electrolyte membrane as mentioned above, there can be considered an installation of the protection member in the front surface side of the electrolyte membrane. In the case that the protection member is installed as mentioned above, the second gasket comes into close contact with the protection member in place of the electrolyte membrane. Therefore, it is possible to inhibit the surface of the electrolyte membrane from being damaged by the close contact. The protection member employs, for example, the resin film. In other words, the resin film having a predetermined thickness is used as the exclusive part.

### Effect of the invention

The present invention achieves the following effects.

In other words, in the present invention, since the anode side gasket and the cathode side gasket are both intensively set to the one separator of a pair of separators which sandwich the membrane electrode assembly as mentioned above, the other separator does not require any groove processing or the gasket integral forming which is applied for retaining the gasket. Accordingly, in this regard, it is possible to simplify the part shape, facilitate the manufacturing and assembling, and achieve the cost reduction.

Further, since the reinforcing member is provided between the electrolyte membrane and the other separator for reinforcing the electrolyte membrane with which the second gasket comes into close contact, from the back surface side of the electrolyte membrane, a sufficient seal surface pressure can be secured in both the anode side gasket and the cathode side gasket. In the case that the reinforcing member utilizes the one electrode layer, for example, extending the one electrode layer, it is necessary to prepare a comparatively expensive part additionally, and a part cost is widely increased. However, it is possible to prevent this kind of problem from being generated by using a comparatively inexpensive part, for example, a resin film.

Further, in connection with the installation of the reinforcing member in the back surface side of the electrolyte membrane, the electrolyte membrane can be protected by installing the protection member in the front surface side of the electrolyte membrane in conjunction with it. In other words, it is possible to inhibit the surface of the electrolyte membrane from being damaged due to the close contact of the gasket with the electrolyte membrane.

### BRIEF EXPLANATION OF THE DRAWINGS

Fig. 1 is a cross sectional view of a substantial part of a fuel cell seal structure according to a first embodiment of the present invention;
Fig. 2 is a cross sectional view of a substantial part of a fuel cell seal structure according to a second embodiment of the present invention;
Fig. 3 is a cross sectional view of a substantial part of a fuel cell seal structure according to a third embodiment of the present invention;
Fig. 4 is a cross sectional view of a substantial part of a fuel cell seal structure according to a fourth embodiment of the present invention;
Fig. 5 is a cross sectional view of a substantial part of a fuel cell seal structure according to a fifth embodiment of the present invention;
Fig. 6 is a cross sectional view of a substantial part of a fuel cell seal structure according to a sixth embodiment of the present invention;
Fig. 7 is a cross sectional view of a substantial part of a fuel cell seal structure according to a seventh embodiment of the present invention;
Fig. 8 is a cross sectional view of a substantial part of a fuel cell seal structure according to an eighth embodiment of the present invention; and
Fig. 9 is a cross sectional view of a fuel cell seal structure according to a prior art.

### Description of Reference Numerals

1 membrane electrode assembly
2 electrolyte membrane
2a exposure portion
3, 4 electrode layer
5, 6 gas diffusion layer
7, 8 separator
9, 10 gasket
9a, 10a lip end
11 reinforcing member
12, 13 space portion
14 protection member
15 coupling portion
16 mounting sheet

### DETAILED DESCRIPTION OF PREFERRED EMBODIMENT

The present invention includes the following embodiments.

### (1) The present invention relates to a seal structure for a fuel cell, and relates to a seal structure by a general gasket.

### (2) Purpose

A cost reduction of a stack is necessary for disseminating the fuel cell in the future, and the gasket used for the stack has the same problem. In relation to the problem, in the case that a gasket constructed by a rubber single body is used, a handling property comes to a problem.

### (3) First Structure

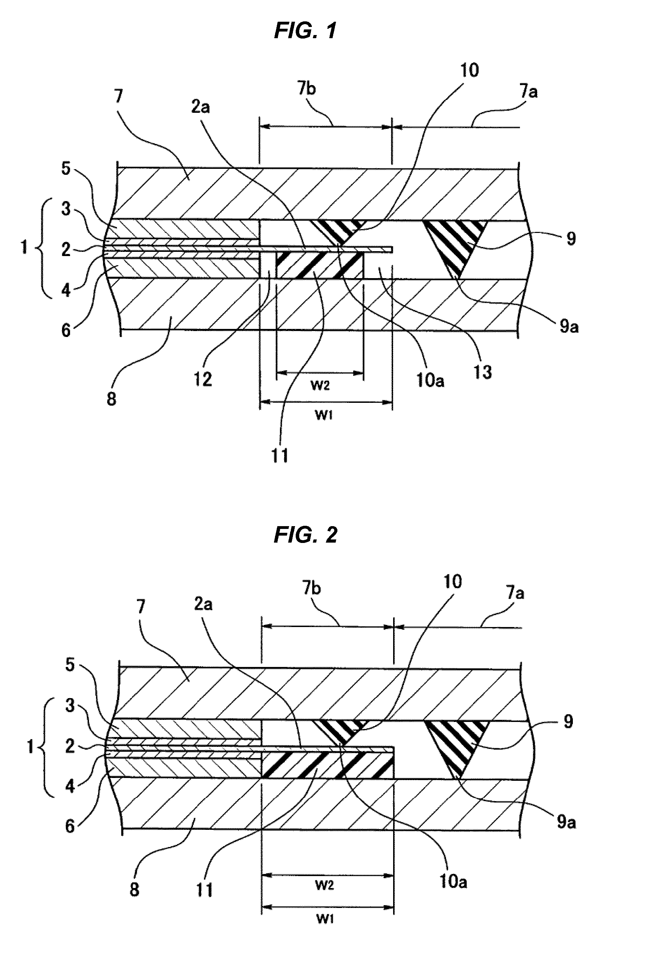

(3-1) The prior art requires the groove processing and the gasket integral forming for each of two separators which pinch the MEA, and has a problem in an improvement of the assembling property and a reduction of the cost. The present invention can improve the assembling property and the cost by using the reinforcing body for one surface of the exposed surfaces of the electrolyte membrane in the general MEA structure, and concentrating and integrating the gaskets to the one side plate pinching the MEA (refer to Figs. 1 to 3).

(3-2) A fuel cell seal structure in a gasket structure sealing an end portion of an MEA in which plan dimensions of anode and cathode electrodes and a GDL are the same, wherein the fuel cell seal structure seals the end portion of the MEA in which one surface side of the electrolyte membrane exposure portion is reinforced by a resin, only by an non-reinforced surface (refer to Figs. 1 to 3).

(3-3) The reinforcing member is used in one surface of the end portion of the electrolyte membrane, and the gaskets are concentrated to one surface side of the MEA. The reinforcing function appears in the reinforcing member as long as a hardness of the reinforcing member is equal to or more than a rubber hardness of the gasket. Preferably, a film and a thin plate in which a height of the resin is controlled is desirable. In this case, it is unnecessary to integrate the gaskets with both two separator pinching the MEA, and it is possible to reduce a cost (refer to Fig. 1).

(3-4) In relation to the above structure (3-3) of the reinforcing member shape which requires the reinforcing effect, an MEA handling property can be improved by reinforcing a full surface of one surface of the MEA (the electrolyte membrane (refer to Fig. 2).

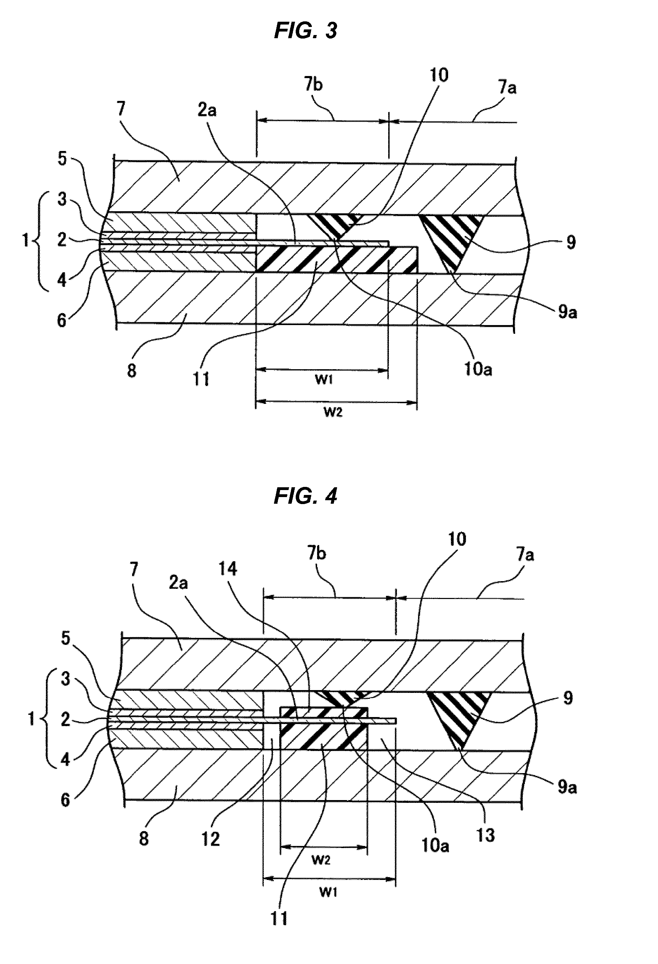

(3-5) In relation to the above structures (3-3) and (3-4), the MEA handling property can be further improved by using a reinforcing member which is larger than the end portion of the MEA (the electrolyte membrane) (refer to Fig. 3).

### (4) Second Structure

(4-1) The prior art requires the groove processing and the gasket integral forming for each of two separators which pinch the MEA, and has a problem in an improvement of the assembling property and a reduction of the cost. The present invention can improve the assembling property and the cost by using the reinforcing body for both surfaces of the exposed surfaces of the electrolyte membrane in the general MEA structure, and concentrating and integrating the gaskets to the one side plate pinching the MEA (refer to Figs. 4 to 6).

(4-2) A fuel cell seal structure in a gasket structure sealing an end portion of an MEA in which plan dimensions of anode and cathode electrodes and a GDL are the same, wherein the fuel cell seal structure seals the end portion of the MEA in which both surfaces sides of the electrolyte membrane exposure portion are reinforced by a resin, only by one side reinforced surface (refer to Figs. 4 to 6).

(4-3) The reinforcing member is used in both surfaces of the end portion of the electrolyte membrane, and the gaskets are concentrated to one surface side of the MEA. The reinforcing function appears in the reinforcing member as long as a hardness of the reinforcing member is equal to or more than a rubber hardness of the gasket. Preferably, a film and a thin plate in which a height of the resin is controlled is desirable. In this case, it is unnecessary to integrate the gaskets with both two separator pinching the MEA, and it is possible to reduce a cost (refer to Fig. 4).

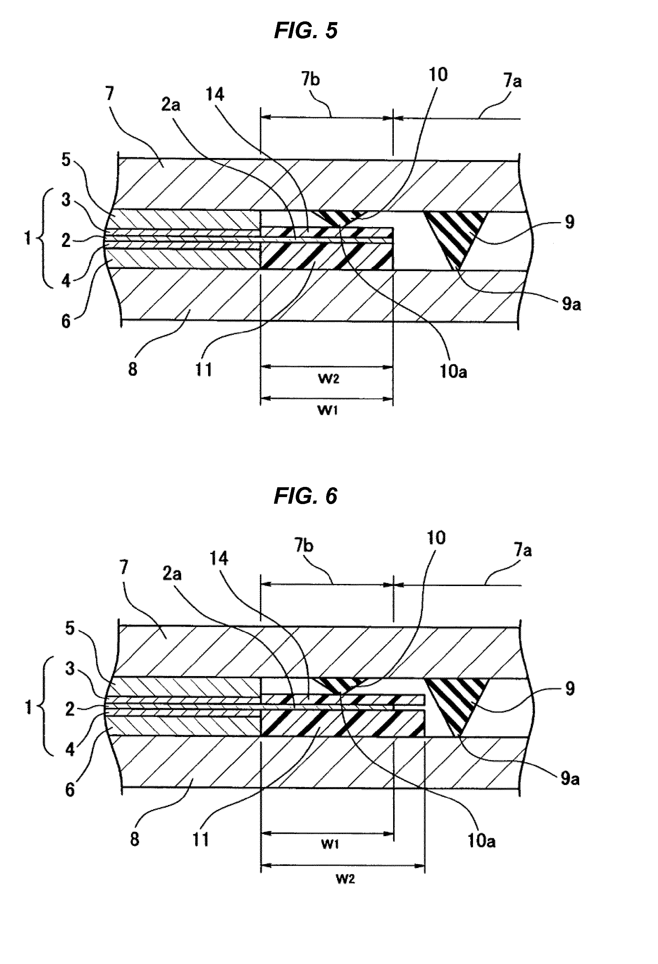

(4-4) In relation to the above structure (4-3) of the reinforcing member shape which requires the reinforcing effect, an MEA handling property can be improved by reinforcing a full surface of both surfaces of the MEA (the electrolyte membrane (refer to Fig. 5).

(4-5) In relation to the above structures (4-3) and (4-4), the MEA handling property can be further improved by using a reinforcing member which is larger than the end portion of the MEA (the electrolyte membrane) (refer to Fig. 6).

### (5) Third Structure

(5-1) The gaskets on the anode surface and the cathode surface are concentrated on one plate.

(5-2) The electrolyte membrane is reinforced by setting surface areas of an anode diffusion electrode (GDL) and a cathode diffusion electrode (GDL) to the same dimension, and installing a resin film to one surface of the protruding electrolyte membrane.

(5-3) The electrolyte membrane is reinforced by setting surface areas of an anode diffusion electrode (GDL) and a cathode diffusion electrode (GDL) to the same dimension, and installing a resin film to both surfaces of the protruding electrolyte membrane.

(5-4) With regard to steps, the gasket is integrally formed in the resin film which is cut out a reaction surface portion and is formed as a frame body, the electrolyte membrane is thereafter installed onto the film, or the electrolyte membrane is thereafter sandwiched by the film, and the resin film and the MEA are integrated according to a heat press.

### Embodiments

Next, a description will be given of an embodiment according to the present invention with reference to the accompanying drawings.

### First Embodiment

Fig. 1 shows a cross section of a substantial part of a seal structure for a fuel cell according to a first embodiment of the present invention, and the seal structure is structured as follows.

First of all, a membrane electrode assembly (MEA) 1 provided with a pair of (anode side and cathode side) electrode layers 3 and 4 in both surfaces in a thickness direction of an electrolyte membrane 2 is provided as a basic structure, and the membrane electrode assembly 1 is sandwiched by a pair of separators 7 and 8 via a pair of gas diffusion layers (GDL) 5 and 6. With regard to a dimensional relationship of the constructing parts for the fuel cell, plane dimensions of a pair of electrode layers 3 and 4 and a pair of gas diffusion layers 5 and 6 are set to be equal to each other, a plane dimension of the electrolyte membrane 2 is set to be larger than the plane dimensions of the electrode layers 3 and 4 and the gas diffusion layers 5 and 6, and a plane dimension of the separators 7 and 8 is set to be further larger than the plane dimension of the electrolyte membrane 2. Accordingly, a peripheral edge portion of the electrolyte membrane 2 is provided with an exposure portion 2a which is not provided with the electrode layers 3 and 4 in its both surfaces and has a predetermined width w1. Further, one separator 7 among a pair of separators 7 and 8 which sandwich the membrane electrode assembly 1 is provided with a section 7a which is opposed to the other separator 8, and a section 7b which is opposed to the exposure portion 2a of the electrolyte membrane 2 in an inner peripheral side (a left side in the drawing) of the section 7a. A combination of the one electrode layer 3 and the gas diffusion layer 5 and a combination of the other electrode layer 4 and the gas diffusion layer 6 may be respectively called as anode side and cathode side diffusion electrodes. In the case that these terms are used, the membrane electrode assembly (MEA) 1 having a pair of (anode side and cathode side) diffusion electrodes is provided in both surfaces in a thickness direction of the electrolyte membrane 2, and the membrane electrode assembly 1 is sandwiched by a pair of separators 7 and 8.

As mentioned above, since the one separator 7 among a pair of separators 7 and 8 sandwiching the membrane electrode assembly 1 is provided with both the section 7a which is opposed to the other separator 8, and the position 7b which is opposed to the exposure portion 2a of the electrolyte membrane 2 in the inner peripheral side of the section 7a, both the anode side gasket and the cathode side gasket are intensively provided in both the sections 7a and 7b. In other words, the section 7a opposed to the other separator 8 is provided with a first gasket 9 which is integrally formed in the one separator 7 and has a lip end 9a coming into close contact with the other separator 8, and the section 7b opposed to the exposure portion 2a of the electrolyte membrane 2 in the inner peripheral side of the section 7a is provided with a second gasket 10 which is integrally formed in the one separator 7 in an inner peripheral side of the first gasket 9 and has a lip end 10a coming into close contact with the exposure portion 2a of the electrolyte membrane 2.

Since the first gasket 9 is provided over a full distance between a pair of separators 7 and 8, the lip end 9a comes into close contact with the other separator 8, whereby a sufficient seal surface pressure is secured between the first gasket 9 and the other separator 8. On the contrary, since a space is left in a back surface side (a lower side in the drawing) of the exposure portion 2a of the electrolyte membrane 2, in the second gasket 10, the exposure portion 2a of the electrolyte membrane 2 made of a soft material runs out toward the space. Accordingly, a seal surface pressure can not be secured. Consequently, in the seal structure, a reinforcing member 11 is installed in the space, whereby the runout of the exposure portion 2a is prevented, and the seal surface pressure is secured. Therefore, the reinforcing member 11 is arranged on the same plane as a surface of the lip end 10a of the second gasket 10.

With regard to the reinforcing member 11, since these parts can not be utilized as the reinforcing member for the dimensional relationship of each of the constituting parts in the basic structure mentioned above, a part exclusively used for reinforcing, that is, a resin film is specifically prepared and the resin film is arranged between the exposure portion 2a of the electrolyte membrane 2 and the other separator 8.

The resin film serving as the reinforcing member 11 is formed as a planar rectangular frame shape in the same manner as the gasket 10 in conformity to a planar rectangular shape of each of the constituting parts and a planar rectangular frame shape of the gasket 10, whereby it is possible to reinforce the exposure portion 2a of the electrolyte membrane 2 over a whole periphery. Further, a thickness of the resin film serving as the reinforcing member 11 is set to be equal to a distance between the exposure portion 2a of the electrolyte membrane 2 and the other separator 8, whereby the runout of the exposure portion 2a is approximately completely prevented. Further, the resin film serving as the reinforcing member 11 is fixed to any one or both of the exposure portion 2a of the electrolyte membrane 2 and the other separator 8 by a fixing means, for example, a heat press or an adhesive bonding, however, may be only interposed between the exposure portion 2a of the electrolyte membrane 2 and the other separator 8 without being fixed.

In the seal structure having the structure mentioned above, since both the anode side and cathode side gaskets 9 and 10 are intensively integrally formed in one separator 7 of a pair of separators 7 and 8 which sandwich the membrane electrode assembly 1, it is not necessary to apply any groove processing or a gasket integrally forming to the other separator 8 in the opposite side for retaining the gaskets 9 and 10. Therefore, in this regard, in correspondence to the initial purpose of the present invention, there can be achieved the simplification of the parts shape, the facilitation of the manufacturing and assembling, and the reduction of the cost.

Further, since the reinforcing member 11 is provided between the exposure portion 2a of the electrolyte membrane 2 and the other separator 8 for reinforcing the exposure portion 2a of the electrolyte membrane 2 with which the second gasket 10 comes into close contact, from the back surface side of the exposure portion 2a, a sufficient seal surface pressure is secured in the second gasket 10 as well as the first gasket 9. For example, in the case that the electrode layer 4 and the gas diffusion layer 6 are utilized as the reinforcing member 11 by being extended, it is necessary to prepare these parts which are comparatively expensive according to an area premium, however, since the embodiment employs the resin film which is comparatively inexpensive and is easily manufactured into the part shape, there can be achieved the simplification of the parts shape, the facilitation of the manufacturing and assembling and the reduction of the cost in this regard.

### Second and Third Embodiments

In the first embodiment, a width w2 of the reinforcing member 11 is set to be smaller than the width w1 of the exposure portion 2a of the electrolyte membrane 2 (w1 > w2), and the space portions 12 and 13 are formed in the inner and outer peripheral portions thereof. However, in the case that the reinforcing member 11 is fixed to the exposure portion 2a of the electrolyte membrane 2, the reinforcing member 11 can reinforce the membrane electrode assembly 1 including the exposure portion 2a of the electrolyte membrane 2 so as to improve a handling workability at a time of the part simple substance. Therefore, it is preferable that the width w2 of the reinforcing member 11 is as large as possible.

In this regard, in Fig. 2 which is shown as a second embodiment, the width w2 of the reinforcing member 11 is set to be equal to the width w1 of the exposure portion 2a of the electrolyte membrane 2 (w1 = w2), whereby a handling workability of the membrane electrode assembly 1 is improved. In this case, since the reinforcing member 11 comes into contact with the end surface portions of the electrode layer 4 and the gas diffusion layer 6, there can be thought of a structure in which the end portion of the reinforcing member 11 is impregnated and integrated with the end portion of the gas diffusion layer 6 in correspondence to a material of the reinforcing member 11.

Further, in Fig. 3 which is shown as a third embodiment, the width w2 of the reinforcing member 11 is set to be larger than the width w1 of the exposure portion 2a of the electrolyte membrane 2 (w1 < w2), whereby the handling workability of the membrane electrode assembly 1 is further improved. In this case, since the reinforcing member 11 comes into contact with the end surface portions of the electrode layer 4 and the gas diffusion layer 6, there can be thought of a structure in which the end portion of the reinforcing member 11 is impregnated and integrated with the end portion of the gas diffusion layer 6 in correspondence to the material of the reinforcing member 11.

### Fourth Embodiment

Fig. 4 shows a cross section of a substantial part of a seal structure for a fuel cell according to a fourth embodiment of the present invention, and the seal structure is structured as follows.

First of all, a membrane electrode assembly (MEA) 1 provided with a pair of (anode side and cathode side) electrode layers 3 and 4 in both surfaces in a thickness direction of an electrolyte membrane 2 is provided as a basic structure, and the membrane electrode assembly 1 is sandwiched by a pair of separators 7 and 8 via a pair of gas diffusion layers (GDL) 5 and 6. With regard to a dimensional relationship of the constructing parts for the fuel cell, plane dimensions of a pair of electrode layers 3 and 4 and a pair of gas diffusion layers 5 and 6 are set to be equal to each other, a plane dimension of the electrolyte membrane 2 is set to be larger than the plane dimensions of the electrode layers 3 and 4 and the gas diffusion layers 5 and 6, and a plane dimension of the separators 7 and 8 is set to be further larger than the plane dimension of the electrolyte membrane 2. Accordingly, a peripheral edge portion of the electrolyte membrane 2 is provided with an exposure portion 2a which is not provided with the electrode layers 3 and 4 in its both surfaces and has a predetermined width w1. Further, one separator 7 among a pair of separators 7 and 8 which sandwich the membrane electrode assembly 1 is provided with a section 7a which is opposed to the other separator 8, and a section 7b which is opposed to the exposure portion 2a of the electrolyte membrane 2 in an inner peripheral side (a left side in the drawing) of the section 7a. A combination of the one electrode layer 3 and the gas diffusion layer 5 and a combination of the other electrode layer 4 and the gas diffusion layer 6 may be respectively called as anode side and cathode side diffusion electrodes. In the case that these terms are used, the membrane electrode assembly (MEA) 1 having a pair of (anode side and cathode side) diffusion electrodes is provided in both surfaces in a thickness direction of the electrolyte membrane 2, and the membrane electrode assembly 1 is sandwiched by a pair of separators 7 and 8.

As mentioned above, since the one separator 7 among a pair of separators 7 and 8 sandwiching the membrane electrode assembly 1 is provided with both the section 7a which is opposed to the other separator 8, and the section 7b which is opposed to the exposure portion 2a of the electrolyte membrane 2 in the inner peripheral side of the section 7a, both the anode side gasket and the cathode side gasket are intensively provided in both the sections 7a and 7b. In other words, the section 7a opposed to the other separator is provided with a first gasket 9 which is integrally formed in the one separator 7 and has a lip end 9a coming into close contact with the other separator 8, and the section 7b opposed to the exposure portion 2a of the electrolyte membrane 2 in the inner peripheral side of the section 7a is provided with a second gasket 10 which is integrally formed in the one separator 7 in an inner peripheral side of the first gasket 9 and has a lip end 10a coming into close contact with a protection member 14 mentioned later.

Since the first gasket 9 is provided over a full distance between a pair of separators 7 and 8, the lip end 9a comes into close contact with the other separator 8, whereby a sufficient seal surface pressure is secured between the first gasket 9 and the other separator 8. On the contrary, since a space is left in a back surface side (a lower side in the drawing) of the exposure portion 2a of the electrolyte membrane 2, in the second gasket 10, the exposure portion 2a of the electrolyte membrane 2 made of a soft material runs out toward the space. Accordingly, a seal surface pressure can not be secured. Consequently, in the seal structure, a reinforcing member 11 is installed in the space, whereby the runout of the exposure portion 2a is prevented, and the seal surface pressure is secured. Therefore, the reinforcing member 11 is arranged on the same plane as a surface of the lip end 10a of the second gasket 10.

With regard to the reinforcing member 11, since these parts can not be utilized as the reinforcing member for the dimensional relationship of each of the constituting parts in the basic structure mentioned above, a part exclusively used for reinforcing, that is, a resin film is specifically prepared and the resin film is arranged between the exposure portion 2a of the electrolyte membrane 2 and the other separator 8.

The resin film serving as the reinforcing member 11 is formed as a planar rectangular frame shape in the same manner as the gasket 10 in conformity to a planar rectangular shape of each of the constituting parts and a planar rectangular frame shape of the gasket 10, whereby it is possible to reinforce the exposure portion 2a of the electrolyte membrane 2 over a whole periphery. Further, a thickness of the resin film serving as the reinforcing member 11 is set to be equal to a distance between the exposure portion 2a of the electrolyte membrane 2 and the other separator 8, whereby the runout of the exposure portion 2a is approximately completely prevented. Further, the resin film serving as the reinforcing member 11 is fixed to any one or both of the exposure portion 2a of the electrolyte membrane 2 and the other separator 8 by a fixing means, for example, a heat press or an adhesive bonding, however, may be only interposed between the exposure portion 2a of the electrolyte membrane 2 and the other separator 8 without being fixed.

Further, in the embodiment, in conformity to the structure in which the reinforcing member 11 is installed in the back surface side of the exposure portion 2a of the electrolyte membrane 2, the protection member 14 is installed to the front surface side of the exposure portion 2a of the electrolyte membrane 2, and the lip end 10a of the second gasket 10 comes into close contact with the protection member 14. Accordingly, the electrolyte membrane 2 can be protected by the protection member 14.

With regard to the protection member 14, since these parts can not be utilized as the protection member for the dimensional relationship of each of the constituting parts in the basic structure mentioned above, a part exclusively used for protecting, that is, a resin film is specifically prepared and the resin film is arranged on the surface of the exposure portion 2a of the electrolyte membrane 2.

The resin film serving as the protection member 14 is formed as a planar rectangular frame shape in the same manner as the gasket 10 in conformity to a planar rectangular shape of each of the constituting parts and a planar rectangular frame shape of the gasket 10, whereby it is possible to protect the exposure portion 2a of the electrolyte membrane 2 over a whole periphery. Further, a thickness of the resin film serving as the protection member 14 is set to be a little smaller than the reinforcing member 11. Further, the resin film serving as the protection member 14 is fixed to the exposure portion 2a of the electrolyte membrane 2 by a fixing means, for example, a heat press or an adhesive bonding, however, may be only mounted on the surface of the exposure portion 2a of the electrolyte membrane 2 without being fixed.

In the seal structure having the structure mentioned above, since both the anode side and cathode side gaskets 9 and 10 are intensively integrally formed in one separator 7 of a pair of separators 7 and 8 which sandwich the membrane electrode assembly 1, it is not necessary to apply any groove processing or a gasket integrally forming to the other separator 8 in the opposite side for retaining the gaskets 9 and 10. Therefore, in this regard, in correspondence to the initial purpose of the present invention, there can be achieved the simplification of the parts shape, the facilitation of the manufacturing and assembling, and the reduction of the cost.

Further, since the reinforcing member 11 is provided between the exposure portion 2a of the electrolyte membrane 2 and the other separator 8 for reinforcing the exposure portion 2a of the electrolyte membrane 2 with which the second gasket 10 comes into close contact, from the back surface side of the exposure portion 2a, a sufficient seal surface pressure is secured in the second gasket 10 as well as the first gasket 9. For example, in the case that the electrode layer 4 and the gas diffusion layer 6 are utilized as the reinforcing member 11 by being extended, it is necessary to prepare these parts which are comparatively expensive according to an area premium, however, since the embodiment employs the resin film which is comparatively inexpensive and is easily manufactured into the part shape, there can be achieved the simplification of the parts shape, the facilitation of the manufacturing and assembling and the reduction of the cost in this regard.

Further, since the protection member 14 is installed to the front surface side of the exposure portion 2a of the electrolyte membrane 2 in conformity to the structure in which the reinforcing member 11 is installed to the back surface side of the exposure portion 2a of the electrolyte membrane 2, the electrolyte membrane 2 can be protected by the protection member 14. In other words, since the gasket 10 directly comes into close contact with the electrolyte membrane 2, it is possible to inhibit the surface of the electrolyte membrane 2 from being damaged.

### Fifth and Sixth Embodiments

In the fourth embodiment, each of the widths w2 of the reinforcing member 11 and the protection member 14 is set to be smaller than the width w1 of the exposure portion 2a of the electrolyte membrane 2 (w1 > w2), and the space portions 12 and 13 are formed in the inner and outer peripheral portions thereof. However, in the case that the reinforcing member 11 and the protection member 14 are fixed to the exposure portion 2a of the electrolyte membrane 2, the reinforcing member 11 and the protection member 14 can reinforce the membrane electrode assembly 1 including the exposure portion 2a of the electrolyte membrane 2 so as to improve a handling workability at a time of the part simple substance. Therefore, it is preferable that the width w2 of the reinforcing member 11 and the protection member 14 is as large as possible.

In this regard, in Fig. 5 which is shown as a fifth embodiment, each of the widths w2 of the reinforcing member 11 and the protection member 14 is set to be equal to the width w1 of the exposure portion 2a of the electrolyte membrane 2 (w1 = w2), whereby a handling workability of the membrane electrode assembly 1 is improved. In this case, since the reinforcing member 11 and the protection member 14 come into contact with the end surface portions of the electrode layers 3 and 4 and the gas diffusion layers 5 and 6, there can be thought of a structure in which the end portions of the reinforcing member 11 and the protection member 14 are impregnated and integrated with the end portions of the gas diffusion layers 5 and 6 in correspondence to a material of the reinforcing member 11 and the protection member 14.

Further, in Fig. 6 which is shown as a sixth embodiment, each of the widths w2 of the reinforcing member 11 and the protection member 14 is set to be larger than the width w1 of the exposure portion 2a of the electrolyte membrane 2 (w1 < w2), whereby the handling workability of the membrane electrode assembly 1 is further improved. In this case, since the reinforcing member 11 and the protection member 14 come into contact with the end surface portions of the electrode layers 3 and 4 and the gas diffusion layers 5 and 6, there can be thought of a structure in which the end portions of the reinforcing member 11 and the protection member 14 are impregnated and integrated with the end portions of the gas diffusion layers 5 and 6 in correspondence to the material of the reinforcing member 11 and the protection member 14.

In the reinforcing member 11 and the protection member 14, the widths w2 and the planar shapes are not necessarily the same.

Further, with regard to each of the embodiments, there can be thought that the structure can be modified as follows.

### Seventh Embodiment

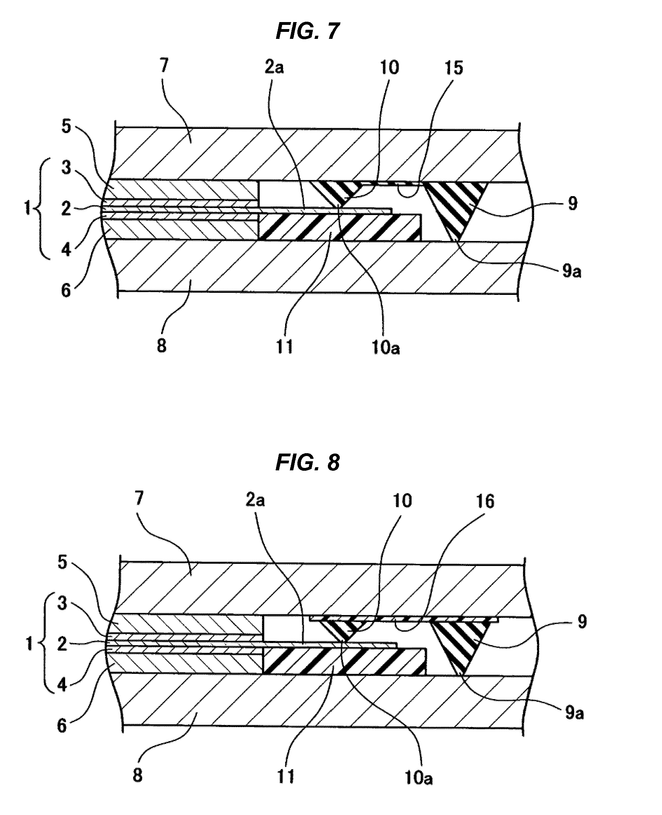

In each of the embodiments mentioned above, both the first and second gaskets 9 and 10 are provided in one separator 7, however, the gaskets 9 and 10 are independently formed from each other. On the contrary, both the gaskets 9 and 10 may be formed integrally with each other, in Fig. 7 which is shown as a seventh embodiment, both the gaskets 9 and 10 are formed so as to be integral with each other via a coupling portion 15.

### Eighth Embodiment

In each of the embodiments mentioned above, the fixing means of the first and second gaskets 9 and 10 to the one separator 7 is constructed as the integrally formed type, however, the fixing means is not particularly limited. For example, in Fig. 8 which is shown as an eighth embodiment, both the gaskets 9 and 10 are integrally formed on a thin resin film which is a mounting sheet 16, and the sheet 16 is fixed to the one separator 7, for example, by a bonding means. In this case, both the gaskets 9 and 10 may be formed integrally with each other in the same manner as the seventh embodiment mentioned above.

Further, in each of the embodiments mentioned above, the gaskets 9 and 10 are described as the structure having the lip ends 9a and 10a, and the cross sectional shapes of the gaskets 9 and 10 are described as the triangular shape in the drawing. However, the structure and the cross sectional shape of the gaskets 9 and 10 are not limited in the present invention. The gaskets 9 and 10 may be provided with no lip ends 9a and 10a, and may be formed as the other cross sectional shape than the triangular shape.

## Claims

1. A seal structure provided in a fuel cell having a membrane electrode assembly which is provided with a pair of electrode layers in both surfaces of an electrolyte membrane, and a pair of separators which sandwich said membrane electrode assembly, and structured such that plane dimensions of said pair of electrode layers are set to be equal to each other, a plane dimension of said electrolyte membrane is set to be larger than said electrode layer, and a plane dimension of said separator is set to be further larger than said electrolyte membrane, the seat structure comprising:
a first gasket which is retained to one separator of said pair of separators and comes into close contact with the other separator; and
a second gasket which is retained to said one separator in an inner peripheral side of said first gasket and comes into close contact with said electrolyte membrane,
wherein a reinforcing member which is a separate body from said electrode layer is provided between said electrolyte membrane and said other separator for reinforcing said electrolyte membrane with which said second gasket comes into close contact, from a back surface side of the electrolyte membrane.

2. The sealing structure according to claim 1, wherein a protection member is provided in a front surface side of said electrolyte membrane at a position two-dimensionally lapping over said reinforcing member which is provided in a back surface side of said electrolyte membrane, and said second gasket comes into close contact with the protection member.

3. The seal structure according to claim 1 or 2, wherein said reinforcing member is constructed by a resin film.

4. The seal structure according to claim 2 or 3, wherein said protection member is constructed by a resin film.
